# EUROPÄISCHE PATENTSCHRIFT

(11) **EP 1 658 246 B1**
(45) Veröffentlichungstag und Bekanntmachung des Hinweises auf die Patenterteilung: **02.07.2014**
(21) Anmeldenummer: 04741211.9
(22) Anmeldetag: 22.07.2004
(51) Int. Cl.: C03C 25/26, C03C 25/28

(54) **SCHLICHTE ZUR BEHANDLUNG VON GLASFASERN SOWIE MIT DIESEN SCHLICHTEN AUSGERÜSTETE GLASFASERN**
SIZE FOR THE TREATMENT OF GLASS FIBERS, AND GLASS FIBERS PROVIDED WITH SAID SIZES
ENDUIT POUR APPRETER DES FIBRES DE VERRE ET FIBRES DE VERRE AINSI APPRETEES

(30) Priorität: 25.07.2003 DE 10333941
(43) Veröffentlichungstag der Anmeldung: 24.05.2006
(73) Patentinhaber: Johns Manville Europe GmbH, 86399 Bobingen (DE)
(72) Erfinder: TESCHNER, Roman, 97084 Würzburg (DE)
(74) Vertreter: Mai, Dörr, Besier
(86) Internationale Anmeldenummer: PCT/EP2004/008181
(87) Internationale Veröffentlichungsnummer: WO 2005/012201

(56) Entgegenhaltungen:
- EP-A1- 0 450 638
- DE-A- 3 447 213
- DE-A- 19 818 046

## Beschreibung

Die Erfindung betrifft eine Schlichte zur Behandlung von Glasfasern sowie Glasfasern, welche mit dieser Schlichte ausgerüstet sind, insbesondere auch derart ausgerüstete Radierfasern aus Glas.

Glasfasern sind schon seit sehr langer Zeit bekannt. Die Herstellung von Glasfasern kann durch Verarbeitung einer Glasschmelze zum Beispiel nach dem Düsenblas-, Schleuder- oder Düsenziehverfahren erfolgen. Glasfasern können als sog. Stapelfasern hergestellt werden, d. h. Fasern mit einer bestimmten Länge oder auch als Filamente, häufig auch als Endlosfasern bezeichnet, gewonnen werden.

Bei der Herstellung von Glasfasern ist es unbedingt erforderlich, die Fasern mit einer sog. Schlichte zu versehen. Diese Schlichte hat u. a. die Aufgabe, die Fasern gegenseitig zu schützen, d. h. zu verhindern, dass sie durch gegenseitiges Reiben durch Abrieb beschädigt werden oder dass es beim gegenseitigen mechanischen Einwirken zur Querfragmentierung (Bruchbildung) kommt.

Eine weitere Aufgabe der Schlichte ist es, den Schneidvorgang der Fasern zu erleichtern, wobei es hier insbesondere darauf ankommt, gleiche Stapellängen zu erreichen. Weiter soll die Schlichte auch die Agglomeration von Fasern vermeiden und insbesondere die Dispergierbarkeit von Kurzfasem in Wasser verbessern, um gleichmäßige Flächengebilde nach dem Naßlegeverfahren zu erhalten. Die Schlichte soll auch dafür sorgen, daß zwischen Glasfasern und Polymeren, in welchen die Glasfasern als Verstärkungskomponente wirken, ein guter Zusammenhalt gewährleistet ist. Dies ist für die sog. glasfaserverstärkten Kunststoffe, auch GFK genannt, von größter Bedeutung.

Schließlich soll eine Schlichte auch den Glasfasern eine gewisse Geschmeidigkeit verleihen und die gegenseitige Reibung der Filamente herabsetzen, insbesondere im Hinblick auf eine gute Weiterverarbeitung der Fasern zu den verschiedensten Produkten.

Die bisher für das Beschichten von Glasfasern entwickelten Schlichten enthalten im Allgemeinen eine ganze Reihe von Bestandteilen, nämlich Filmbildner, Gleitmittel, Netzmittel, Haftvermittler und sonstiges.

Der Filmbildner verleiht dem Faserbündel die Integrität, er schützt die Glasfilamente vor gegenseitiger Reibung und ist auch für die Affinität zum Kunstharz und damit für die Festigkeit und den Zusammenhalt des Verbundwerkstoffes verantwortlich.

Als Filmbildner werden u. a. Stärkederivate, Polymere und Copolymere von Vinylacetat und Acrylestern, Epoxidharzemulsionen, Polyurethanharze, Polyamide mit einem Anteil von 0,5 bis 12 % Gewichtsprozent bezogen auf die gesamte Schlichte eingesetzt.

Das Gleitmittel in der Schlichte verleiht den geschlichteten Glasfasern und den Glasfaserprodukten Geschmeidigkeit und setzt die gegenseitige Reibung der Glasfasern sowohl bei der Herstellung als auch bei der Weiterverarbeitung herab. Die meisten Gleitmittel beeinträchtigen jedoch die Haftung zwischen Glas und Harz.

Als Gleitmittel werden u. a. Fette, Öle, Polyalkylenamine in einer Menge von 0,01 bis 1 Gew.-% eingesetzt.

Die ebenfalls in den bekannten Schlichtemittel eingesetzten Netzmittel haben die Aufgabe die Oberflächenspannung herabzusetzen und für eine verbesserte Benetzung der Filamente mit der Schlichte zu sorgen. Als Netzmittel werden in wässrigen Schlichtemitteln z. B. Polyfettsäureamide beispielsweise in einer Menge von 0,1 bis 1,5 Gew.% verwendet.

Da die meisten Harze (Polymere) keine gute Affinität zum Glas aufweisen, ist es erforderlich zwischen Glas und Harz eine sog. Brücke zu schaffen, die eine bessere Kraftübertragung im Verbund bei Verbundwerkstoffen ermöglicht. Dies geschieht durch sogenannte Haftvermittler. Die Haftvermittler erhöhen die Adhäsion von Polymeren an der Glasoberfläche.

Als Haftmittel dienen meistens organofunktionelle Silane, wie z. B. γ-Aminopropyltriethoxysilan, γ-Methacryloxypropyltrimethoxysilan, γ-Glycidyloxypropyltrimethoxysilan und ähnliches.

Bevor die Silane der wässrigen Schlichte zugesetzt werden, werden sie meistens zu Silanolen hydrolisiert. Ein Silanol reagiert mit der reaktiven Glasoberfläche und bildet aus dem absorbierenden Silanol eine Haftmittelschicht mit einer Dicke von ca. 3 nm, die sich wie ein Schutzschleier über die Faseroberfläche zieht.

Der Schutzschleier als Oligomer, anfangs noch löslich, kondensiert später zu vernetzten Strukturen und liegt am Ende nach einer thermischen Behandlung (Trocknung) als ein Siloxan (= Si-O-Si =) vor. Die Hydrolysatlösung ist nur begrenzt stabil und neigt zur Kondensation.

Aus DE-A-19818046 sind wässrige Schlichten bekannt, die lediglich Filmbildner und Haftvermittler aufweisen. Gemäß DE-A-19818046 erfolgt die Einstellung des pH-Wertes im Bereich 4,5 bis 6 durch Zusatz von Essigsäure. Als Filmbildner wird eine Mischungen aus zwei filmbildende Komponenten, Polyvinvipyrrolidon und Polyamidoamid, offenbart.

Ein weiteres Problem bei der mit Schlichte versehenen Glasfasern ist die Korrosion der Glasfasern. Kommen Glasfasern, insbesondere die stärker alkalischen Glasfasern aus C-Glas mit Wasser in Berührung, beginnt ein Korrosionsprozess, der auf Auslaugung und Abtragung der Glasoberfläche beruht und mit folgenden chemischen Reaktionen beschrieben werden kann.

≡Si-O-Na+H₂O → ≡ Si -O - H + Na⁺ + OH

≡ Si-O-K+H₂O → ≡Si-O-H+K⁺ + OH

Die dabei freiwerdende Lauge wie z. B. NaOH, KOH greift das Kieselsäuregerüst der Glasfasern an, wobei folgender chemischer Prozess abläuft:

≡ Si -O - Si - +OH → ≡ Si -O + ≡Si-OH

In der EP 0 450 638 A1 wird eine chemische Zusammensetzung beschrieben, die als Schlichte für das Ausrüsten von Glasfasern dienen soll. Diese chemische Zusammensetzung enthält ein wasserlösliches filmbildendes Polymer mit einer Intrinsicviskosität von weniger als ca. 150 mPas, ein organofunktionelles Trialkoxysilan, das hydrolisiert wird und zwar ganz, teilweise oder auch nicht hydrolisiert wird, ein kationisches Gleitmittel sowie ein Epichlorhydrinpolyamid- Reaktionsprodukt sowie Wasser. Die dort beschriebene Zusammensetzung, die härtbar ist, soll insbesondere der Verbesserung der Schneidfähigkeit der Fasern dienen. Die Verbesserung der Widerstandsfähigkeit gegen Korrosion wird in dieser Europäischen Patentanmeldung nicht angesprochen, auch ist nicht von Radierfasern die Rede.

Aufgabe der Erfindung ist es, eine Schlichte zur Verfügung zu stellen, die zu mit einer Schlichte ausgerüsteten Glasfasern führt, die nicht oder erheblich weniger zu Korrosion neigen. Aufgabe der Erfindung ist es ferner, eine Schlichte zur Verfügung zu stellen, die einfach herzustellen ist und die folgenden Anforderungen erfüllt, nämlich eine gute Faserschneidfähigkeit, eine gute Faserbenetzung mit dem Bindemittel sowie eine ausreichende Steifigkeit der Filamente.

Überraschenderweise wurde diese Aufgabe gelöst durch eine Schlichte für Glasfaser, gemäß Anspruch 1.

Die erfindungsgemäße Schlichte enthält als Filmbildner Polyvinylpyrrolidon. Als Haftvermittler ist insbesondere ein zum Silanol hydrolisiertes γ-Aminopropyltriethoxysilan geeignet.

Als Mittel zum Einstellen eines pH-Wertes im sauren Bereich ist Essigsäure besonders geeignet.

Eine besonders bevorzugte Ausführungsform der erfindungsgemäßen Schlichte setzt sich zusammen aus 0,02 bis 0,08 Gew.-% Polyvinylpyrrolidon, 0,3 bis 0,5 Gew-% γ-Aminopropyltriethoxysilan, 0,18 bis 0,24 Gew.-% Essigsäure, Rest Wasser, wobei die Summe der Bestandteile 100 % ergibt.

Die vorstehend gemachten Gewichtsprozent-(Gew.-%)-Angaben beziehen sich auf die Substanz als solche. Zum Ansetzen dieser bevorzugten Ausführungsform wird Polyvinylpyrrolidon bevorzugt als 20-prozentige wässrige Lösung eingesetzt, die Essigsäure wird in einer Konzentration von 60 % eingesetzt. Die Angabe Rest Wasser bezieht sich auf die Gesamtmenge Wasser, die in der Schlichte vorhanden ist, wobei, um auf 100-prozent Bestandteile zu kommen, das Gesamtwasser sich aus dem Verdünnungswasser vom Polyvinylpyrrolidon, dem Verdünnungswasser bei der 60-prozentigen Essigsäure sowie dem zur Vervollständigung auf 100 Teile zugesetzten zusätzlichen Wasser errechnet.

Der pH des erfindungsgemäßen Schlichtemittels beträgt vorzugsweise 4,5 bis 5,0. Der Festkörperanteil der erfindungsgemäßen Schlichte, d. h. der Anteil an Filmbildner und Haftvermittler liegt vorzugsweise zwischen 0,3 und 0,6 Gew.-%.

Unter Radierfasern versteht man Glasfasern, die u. a. eingesetzt werden zum Polieren, zum Reinigen von Flächen auch Scheiben von Fernsehapparaten oder Monitoren, zum Polieren von Juweliererzeugnissen, zur Rostbeseitigung usw. Diese Radierfasern werden z. B. in Schleifscheiben eingesetzt, finden auch Verwerdung in Reinigungstüchern und dergleichen. Es handelt sich dabei um Fasern von sehr feinem Titer, z. B. Durchmesser im Bereich von 50 µm. Bevorzugt sind Fasern mit einem Durchmesser von 30 bis 70 µm.

Ein weiterer Gegenstand der Erfindung sind Glasfasern, welche mit einer der vorstehend beschriebenen Schlichte ausgerüstet sind.

Ein weiterer Gegenstand der Erfindung sind Radierfasern aus Glas, welche mit einer der vorstehend beschriebenen Schlichten ausgerüstet sind.

Die Herstellung der erfindungsgemäßen Schlichte kann z. B. auf folgende Weise geschehen: Zunächst wird Wasser mit einer entsprechenden Menge Essigsäure, z. B. 60 %-ige Essigsäure, vermengt und vorgelegt. Daneben wird γ-Aminopropyltriethyloxysilan mit entionisiertem Kaltwasser und etwas Essigsäure zum Aminosilanol hydrolisiert. Die Hydrolysedauer beträgt im Allgemeinen etwa 15 Minuten. Die so erhaltene Hydrolysemischung wird dem mit Essigsäure angesäuerten Wasser zugegeben.

Polyvinylpyrrolidon wird unter Rühren mit Heißwasser verdünnt und dem Ansatz zugesetzt. Zusammen wird die restliche Wassermenge zugegeben, weiter gerührt und der pH-Wert der Schlichte bestimmt.

Die so erhaltene Schlichte ist sofort fertig zum Schlichten von Glasfasern.

Es war besonders überraschend, daß die erfindungsgemäße Schlichte nicht nur die Korrosionsbeständigkeit der derart ausgerüsteten Fasern erhöht, sondern daß auch Faserschneidfähigkeit, die Radierfähigkeit, die Faserbenetzung, die Steifigkeit nicht beeinträchtigt werden.

Die so ausgerüsteten Fasern neigen nicht zum Agglomerieren und sind besonders geeignet, als Radierfasern eingesetzt zu werden.

Die Erfindung wird anhand folgenden Beispiels näher erläutert:

### Beispiel

150 kg Wasser und 680 g Essigsäure (60 %), werden vorgelegt. 800 g γ-Aminopropyltriethoxysilan (A1100) wird mit 8 kg entionisiertem Kaltwasser und 20 g 60-% Essigsäure zum Aminosilanol hydrolisiert. Die Hydrolysedauer beträgt 15 Minuten bei Raumtemperatur. Die Hydrolysatlösung wird sodann zu der angesäuerten Wasserlösung zugegeben.

400 g Polyvinylpyrrolidon (K90 als 20 %-ige wässrige Lösung) wird unter Rühren in 8 kg Heißwasser verdünnt und dem Ansatz zugesetzt. Sodann wird mit weiterem Wasser (32,1 kg) auf 100 Teile erhöht. Nach weiterem Rühren wird der pH-Wert bestimmt und die Schlichte ist sofort gebrauchsfertig.

Bei dem verwendeten Polyvinylpyrrolidon K90 handelt es sich um ein Produkt der ISP Global Technology Deutschland GmbH, 50203 Frechen und bei dem verwendeten Aminosilan A1100 um ein Produkt der Witco Specialty Chemicals GmbH, 36396 Steinau a. d. Strasse.

## Patentansprüche

1. Schlichte für Glasfaser, **dadurch gekennzeichnet, dass** sie im Wesentlichen neben Wasser nur einen Filmbildner, einen Haftvermittler, eine organische Säure zur Herstellung eines pH-Wertes im sauren Bereich enthält , der Anteil an Filmbildner und Haftvermittler in der Schlichte zwischen 0,3 und 0,6 Gew.% liegt und der Filmbildner Polyvinylpyrrolidon ist.

2. Schlichte nach Anspruch 1, **dadurch gekennzeichnet, dass** der Haftvermittler ein zum Silanol hydrolisiertes γ-Aminopropyltriethoxysilan ist.

3. Schlichte nach einem der Ansprüche 1 oder 2 **dadurch gekennzeichnet, dass** das Mittel zum Einstellen eines pH-Wertes im sauren Bereich Essigsäure ist.

4. Schlichte nach mindestens einem der Ansprüche 1 bis 3, **dadurch gekennzeichnet, dass** die Schlichte sich zusammensetzt aus 0,02 bis 0,08 Gew.-% Polyvinylpyrrolidon 0,3 bis 0,5 Gew-% γ-Aminopropyltrietoxysilan, 0,18 bis 0,24 Gew.-% Essigsäure Rest Wasser, wobei die Summe der Bestandteile 100 % ergibt.

5. Schlichte nach mindestens einem der Ansprüche 1 bis 4, **dadurch gekennzeichnet, dass** der pH-Wert 4,5 bis 5,0 beträgt.

6. Glasfasern ausgerüstet mit einer Schlichte gemäß mindestens einem der Ansprüche 1 bis 5.

7. Verwendung von Glasfasern ausgerüstet mit einer Schlichte nach mindestens einem der Ansprüche 1 bis 5 als Radierfasern.

## Claims

1. A glass fibre size, **characterised in that** it basically contains, besides water, only a film former, an adhesion promoter, and an organic acid for producing a pH value in the acidic range, the proportion of film former and adhesion promoter in the size being between 0.3 and 0.6 % by weight, and the film former being polyvinylpyrrolidone.

2. The size according to Claim 1, **characterised in that** the adhesion promoter is a γ-aminopropyltriethoxysilane hydrolysed to form silanol.

3. The size according to one of Claims 1 or 2, **characterised in that** the means for setting a pH value in the acidic range is acetic acid.

4. The size according to at least one of Claims 1 to 3, **characterised in that** the size is composed of 0.02 to 0.08 % by weight of polyvinylpyrrolidone, 0.3 to 0.5 % by weight of γ-aminopropyltriethoxysilane, 0.18 to 0.24 % by weight of acetic acid, the rest being formed by water and the sum of the constituents being 100 %.

5. The size according to at least one of Claims 1 to 4, **characterised in that** the pH value is 4.5 to 5.0.

6. Glass fibres sized with a size according to at least one of Claims 1 to 5.

7. Use of glass fibres sized with a size according to at least one of Claims 1 to 5 as erasing fibres.

## Revendications

1. Ensimage pour fibre de verre **caractérisé en ce qu'**il contient essentiellement, outre de l'eau, uniquement une résine filmogène, un agent adhésif, un acide organique pour l'obtention d'une valeur pH acide ; que la proportion de résine filmogène et d'agent adhésif dans l'ensimage étant comprise entre 0,3 et 0,6 % en poids et que la résine filmogène est composée de polyvinylpyrrolidone.

2. Ensimage selon la revendication 1, **caractérisé en ce que** l'agent adhésif est composé d'γ-aminopropyltriethoxysilane hydrolysé en silanol.

3. Ensimage selon l'une des revendications 1 à 2, **caractérisé en ce que** l'agent utilisé pour obtenir un pH acide est l'acide acétique.

4. Ensimage selon au moins l'une des revendications 1 à 3, **caractérisé en ce que** l'ensimage est composé dans une proportion comprise entre 0,02 et 0,08 % de poids de polyvinylpyrrolidon, entre 0,3 et 0,5 % de poids d'yaminopropyltrietoxysilan, entre 0,18 et 0,24 % de poids d'acide acétique et d'eau, la somme des composantes étant de 100 %.

5. Ensimage selon au moins l'une des revendications 1 à 4, **caractérisé en ce que** la valeur pH est comprise entre 4,5 et 5,0.

6. Fibres de verre avec ensimage selon au moins l'une des revendications 1 à 5.

7. Utilisation de fibres de verre avec ensimage selon au moins l'une des revendications 1 à 5 en tant que fibre de nettoyage.
